# EUROPEAN PATENT SPECIFICATION

(11) **EP 3 502 347 B1**
(45) Date of publication and mention of the grant of the patent: **30.07.2025**
(21) Application number: 18211327.4
(22) Date of filing: 10.12.2018
(51) Int. Cl.: D06P 5/20, D06P 1/00, A43D 8/22, B32B 27/16, A43B 1/00

(54) **SHOE CUSTOMIZATION PROCESS**
SCHUHINDIVIDUALISIERUNGSPROZESS
PROCEDES DE INDIVIDUALISATION DES CHAUSSURES

(30) Priority: 19.12.2017 IT 201700146143
(43) Date of publication of application: 26.06.2019
(73) Proprietor: Kuma S.R.L., 40125 Bologna (IT)
(72) Inventor: SECCHI, Antonio, I-40125 BOLOGNA (IT); FUMI, Giovanni, I-40125 BOLOGNA (IT)
(74) Representative: Long, Giorgio

(56) References cited:
- JP-A- 2003 128 932
- KR-A- 20050 055 248
- US-A1- 2012 267 277
- US-A1- 2013 006 407
- US-A1- 2014 020 192
- US-B1- 6 245 710
- DATABASE WPI Week 200643, 29 October 2006 Derwent World Patents Index; AN 2006-420826, XP002784232

## Description

It is the object of the present invention a method for customising shoes and other consumer items, such as, for example, leatherwear and the like.

The request, by consumers, for shoes and other similar items, such as, for example, leatherwear in natural leather or in synthetic material, customised with writings, drawings or images provided by the buyer itself, is known.

The customisation of such items, specifically shoes, on the basis of a design or image provided by the end user, entails considerable issues on an industrial level, especially in the automatic management of orders and in the manufacture of the customised shoe itself.

Using conventional printing technologies on the materials with which shoes are made involves many disadvantages, such as:
- a lack of flexibility, since the printing process must commonly be applied to a flat material, which is placed at a predetermined distance from the print heads, generating a limited possibility of customising the single pair of shoes;
- the use of inks generates issues related to the cleaning of the equipment, limiting the quality and efficiency of the production flow;
- the use of solvents, commonly used to convey inks, generates issues related to safety and toxicity in the workplace;
- the application of the inks may not result in a stable and persistent image on the shoe.

US 6,245,710 concerns a material that is used to imprint an image on a final product by transferring an image on a flat surface (T-shirt) by ironing.

JP 2003 128932, although describing consumer articles on which a layer of a material that changes color with the temperature is applied, it teaches that the composition applied to the article must change color with a change of the ambient temperature (typically 20-25°C) and that this change is reversible. This method does not provide for the creation of a permanent image thanks to a heat treatment, in particular a laser treatment.

US 2012/267277 too describes consumer articles that include a material that changes color depending on the environmental conditions in a reversible way.

US 2013/006407 and KR 2005/0055248 describe methods of making customised shoes based on data which is inputted via a website.

In this context, the technical task underlying the present invention is to make available a method for customising consumer items such as shoes, leatherwear and the like, which allows for the most automatic and efficient management of the working process, starting from the order by the customer to the manufacture of the customised item.

The technical task and the objects specified are substantially achieved by a method for customising consumer items comprising the technical features explained in one or more of the accompanying claims, the definitions of which form an integral part of the present description.

It is a further object of the invention a consumer item, in particular a shoe or a leather item, customised according to the method of the invention.

Further features and advantages of the present invention will become more apparent from the indicative, and therefore non-limiting, description of a preferred but not exclusive embodiment of the invention, as shown in the accompanying drawings in which:
- Figure 1 shows a sectional view of a multilayer material which can be used for manufacturing a consumer item customised according to method of the invention;
- Figure 2 shows a simplified diagram of a lamination process which can be used for preparing the multilayer material in accordance with the invention;
- Figure 3 shows a simplified diagram of the customising method in accordance with the invention.

The method for customising consumer items in accordance with the invention is based on the use of an inkless hot printing system commonly known as "direct thermal imaging".

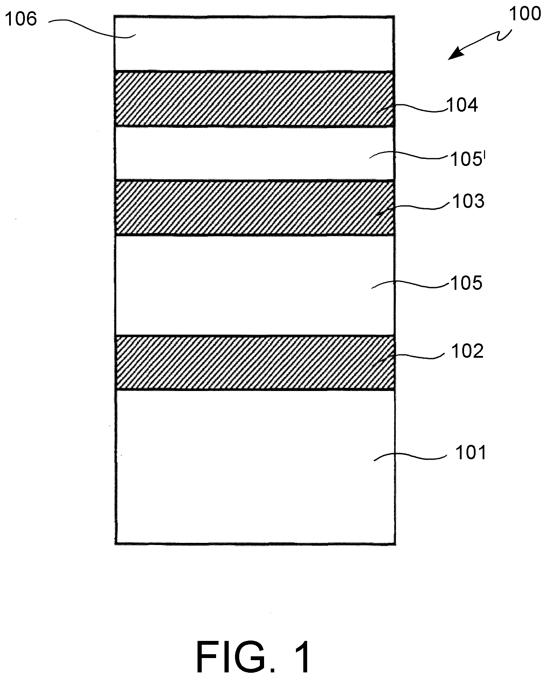

Such printing system provides for the use of a multilayer material 100 as shown in Figure 1, comprising, in the order:
i) a base layer 101,
ii) colouring layers 102, 103, 104 containing heat-sensitive pigments, possibly interspersed by insulating layers 105, 105', and
iii) a protective layer 106.

The term "inkless hot printing" refers to a system in which the printing means do not provide for the deposition of inks for obtaining the image, since the ink, based on said heat-sensitive pigments, is already present, for example, in a colourless form, on the multilayer material 100 and takes on a colouration by means of the application of heat by means of the printing means.

For the purposes of the present invention, the base layer 101 can be any material usually used for manufacturing consumer items such as shoes or leatherwear and the like. For example, the base layer 101 can be made of natural or synthetic leather, plastic material, fabric or composite materials derived therefrom. The base layer 101 can also be, in turn, a multilayer, for example a multilayer of leather-polymeric film, leather-fabric, fabric-polymeric film or combinations thereof.

The colouring layers 102, 103, 104 can be two or more layers, depending on of the colour to be obtained. In preferred embodiments, the multilayer material 100 comprises three colouring layers 102, 103, 104, conventionally, one layer forming a yellow colouration (absorption in the blue), one forming a magenta colouration (absorption in the green) and one forming a light blue-cyan colouration (absorption in the red), i.e., the colours which, suitably combined, can provide all the colourations of the spectrum. There can also be an additional layer forming the black colouration and/or one forming the white colouration.

The heat-sensitive pigments or dyes used in the colouring layers 102, 103, 104 of the present invention are known. Examples of such dyes are described in USP 6,801,233, USP 6,951,952, USP 7,008,759, USP 7,279,264, USP 7,388,686 and USP 7,282,317.

Another example of dyes adapted to the object of the present invention are described in US Appln. 2010/0099556 in the name of Zink Imaging, Inc.. Such patent publication describes dyes which, in the crystalline form thereof, are colourless, but when they are melted or brought into solution so as to take on the amorphous form, they acquire the desired colouration. By suitably selecting such dyes so as to obtain the desired colouration when subjected to a specific amount of thermal energy and therefore to a certain temperature, different from one dye to the other, it is possible, for example, to produce the colouring layers 102, 103, 104 with the primary colours described above.

The pigments/dyes which can be used in the present invention are, for example, dispersed in a suitable solvent and can contain a suitable binder, as described, for example, in US Appln. 2010/0099556 (paragraphs 111 and 112).

As mentioned above, the colouring layers 102, 103, 104 can be interspersed with insulating layers 105, 105', in particular thermo-insulating layers as, for example, the thermo-insulating layer described in Example 7 of US Appln. 2010/0099556. A thermo-insulating layer 105 can also be arranged, if necessary, between the base layer 101 and the first colouring layer 102.

The multilayer material 100 of the invention also comprises a protective layer 106. The protective layer 106 can be an oxygen barrier layer, a UV barrier layer, an anti-scratch or finishing coating, or it can in turn be a multilayer including one or more of the aforesaid protective layers. Examples of such protective layers 106 are given in US Appln. 2010/0099556, example 7.

The multilayer material 100 of the invention can be manufactured as described in the aforementioned prior patents, in particular, in US Appln. 2010/0099556, or it can be obtained by lamination according to conventional methods.

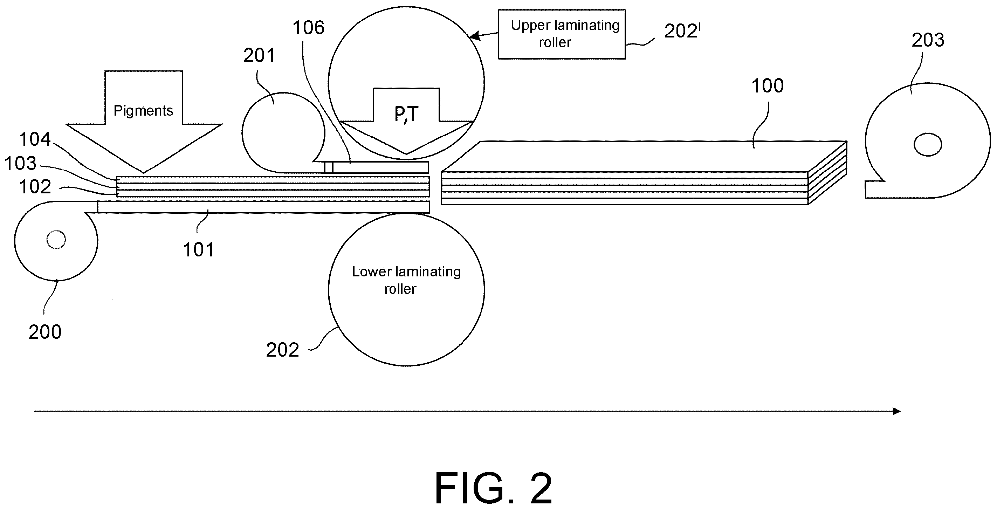

Figure 2 shows, schematically and in a simplified manner, a lamination method. For simplicity, the insulating layers 105, 105' have been omitted.

The base layer 101 is unwound from a roll 200 and the colouring layers 102, 103, 104, and finally the protective layer 106 (which is unwound from a roll 201) are deposited thereon. The multilayer then passes between two lower 202 and upper 202' laminating rollers, operating at a predefined temperature T and pressure P, and the material 100 thus obtained is rewound on a second roll 203, from which it can be withdrawn for the subsequent manufacture of consumer items, for example, for the manufacture of shoe uppers.

The multilayer material 100 thus obtained will therefore be colourless or it will have a homogeneous colour resulting from the colouration of the underlying base layer 101 and a desired image can be obtained thereon by means of a direct thermal imaging system.

The heat source used to impress the image on the multilayer material 100 used in the present invention can be of various types, but it preferably is a laser source. Examples of laser sources and of hot printing systems which can be used in the method of the invention are described in US Appln. 2010/0099556. The modulation of the energy of the laser beam in terms of wavelength and intensity allows to obtain a transition of the dyes from the colourless form to the coloured one, according to a predetermined protocol. The intermediate colours are obtained from the primary colours, by suitably dosing the laser source so as to have a partial transition between the colourless form and the coloured form in two or more superimposed layers.

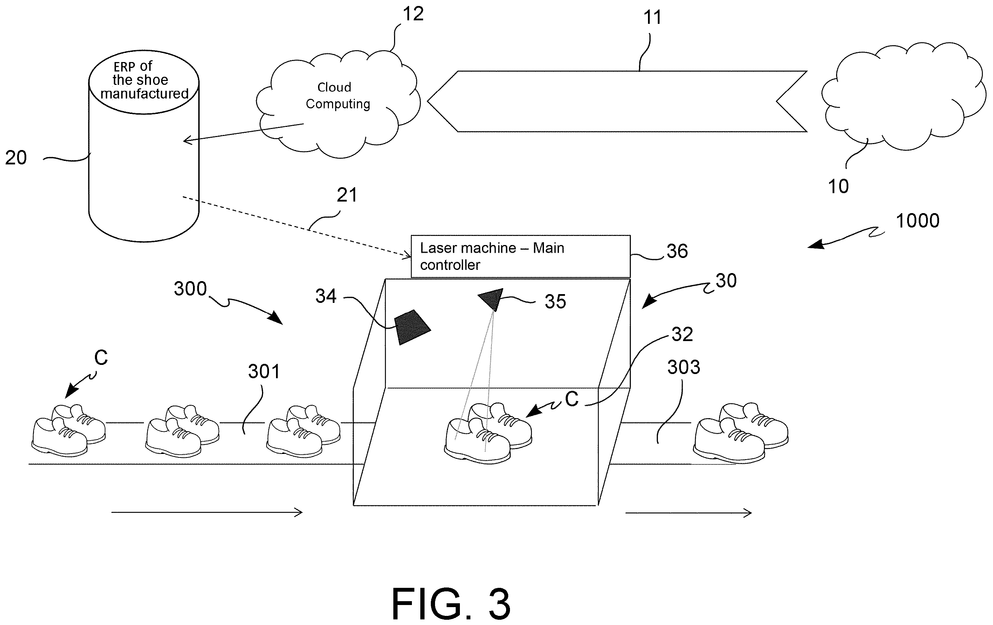

Figure 3 shows a simplified diagram of an electronic system 1000 configured to implement the method for customising of a consumer item, in particular a shoe.

Such electronic customisation system 1000 comprises a user electronic device 10 configured to share data and information with a central processing unit 20 associated with a provider of the customisation service.

In particular, both the user electronic device 10 and such central processing unit 20 are configured to connect to an IT platform 12 ("cloud computing") for sharing data and information by means of a telecommunication network 11, for example, the Internet.

The user electronic device 10 is, for example, a fixed electronic device, such as a desktop PC. Alternatively, the user electronic device 10 is of the portable type and is, for example, a laptop, a tablet or a smartphone.

The aforesaid central processing unit 20 is a management server of the customisation service associated with the provider of such service. Such management server 20 is configured, for example, to operate on the basis of an Enterprise Resource Planning management software (ERP).

Furthermore, such management server of the customisation service 20 is configured to transmit data and information to a customisation apparatus 300 through a data communication line 21 of the wireless or of the wired type.

In an embodiment, such customisation apparatus 300 comprises:
- a customisation unit 30;
- a system 301 for transporting the items C into the customisation unit 30, for example a conveyor belt;
- a system 303 for transporting the customised items C out of the customisation unit 30.

In a different embodiment, in particular for small productions, the insertion of the items C into the customisation unit 30 and the removal thereof after the customisation can be carried out manually. In other words, the customisation apparatus 300 only consists of a customisation unit 30.

Such customisation unit 30 comprises:
- an electronic control module 36 for controlling the customisation operation, configured to receive data and information from the management server 20;
- a customisation chamber 32;
- a 3D scanning device 34 and a laser printing device 35 housed in the aforesaid customisation chamber 32.

The method for customising consumer items C, made of or comprising the multilayer material 100 of the invention, when carried out by means of the customisation system 1000 comprises, in the most general form thereof, the following steps:
a) selecting the consumer item C to be customised;
b) selecting an image or graphic for customisation;
c) generating a virtual 3D model of the item (C) to be customised;
d) optionally, modifying the virtual 3D model generated in step c);
e) generating a 3D file representative of the virtual 3D model of the steps c) or d);
f) transmitting the 3D file to the IT platform (12) ("cloud computing") for sharing data and information by means of the telecommunication network (11);
g) managing the 3D file;
h) customising the consumer item C selected with the selected image or graphic.

The method defined above provides that the steps from a) to f) are carried out by a user of the customisation service, using the user electronic device 10. The steps g) and h) are, instead, carried out by the provider of the customisation service. The providers of the customisation service can be the same producers of the consumer item, or they can avail themselves of consumer items provided by different production sources, limiting themselves to providing only the customisation service on articles of different sources. In another embodiment, the providers of the customisation service will make use of third parties for customising the item produced by them or by others.

The step a) of selecting the consumer item is carried out by the user through a user interface with the IT platform for sharing data and information 12 made available by the provider of the customisation service or by means of a software application made available by the provider of the customisation service, stored on the user electronic device 10 and executed on such device for executing the steps of the selection.

The selection of the consumer item comprises the following steps:
a1) selecting the type of item, for example shoe or leather item such as belts, bags or the like, or another item;
a2) selecting the model of the selected item, for example sneaker model or other shoes or bag model;
a3) if provided, selecting the colour of the base layer 101;
a4) if provided, selecting the material of the base layer 101, for example, natural or synthetic leather, plastic material, fabric or combinations thereof;
a5) in the case of shoes, selecting the size of the shoe to be customised.

The consumer item is made of or comprises the multilayer material 100 of the invention. In the present case, the term "comprises" includes both the arrangement of the multilayer material 100 on an underlying substrate of different material, as well as the provision of inserts of multilayer material 100 on an item made of a different material.

The step b) of selecting an image or graphic for the customisation can be carried out by selecting a series of image or graphic made available by the provider of the customisation service through a user interface with the IT platform for sharing data and information 12 made available by the provider of the customisation service or by means of a software application made available by the provider of the customisation service, stored on the user electronic device 10 and executed on such device for executing the steps of the selection. Alternatively, the user can load, on such IT platform for sharing data and information 12, an image or graphic thereof.

The step c) of creating a virtual 3D model is carried out by means of a software, of the type *per* se known, made available by the provider of the customisation service on the IT platform for sharing data and information 12 or in the aforesaid software application stored on the user electronic device 10. Preferably, such virtual 3D model is generated including the image or graphic selected in a position and with a predetermined size.

By means of step d) of modifying the virtual 3D model the user can modify the position and/or the size of the selected image or graphic or change the colouration and/or the contrast and/or brightness parameters thereof or replace the selected image or graphic with a different image or graphic if the visual effect is not satisfactory. Step d) is carried out with the aid of digital image processing software *per se* known, made available by the provider of the customisation service on the IT platform for sharing data and information 12 or in the aforesaid software application stored on the user electronic device 10.

The step e) of creating the 3D file comprises generating a 3D file in a neutral format, such as pdf format or stp/step format, and, optionally, generating a 3D file in a format compatible with 3D printers.

Files compatible with 3D printers are polygonal 3D (mesh) files, for example, in STL, AMF or 3MF format. This type of files allows the user in possession of a 3D printer to realize a real-scale or reduced-scale model ("mockup") of the selected item, so as to have better visual information on the article to be customised. For example, in the case of shoes, the user can compare the sole of the 3D model of the shoe to be customised with one in the possession thereof, so as to verify the size thereof.

The step f) of sending the 3D file on the IT platform 12 ("cloud computing") for sharing data and information is carried out by means of said software application made available by the provider of the customisation service, stored on the user electronic device 10 and executed on such device. The step f) comprises the following steps:
f1) sending the 3D file in a neutral format, for example, pdf or stp/step format;
f2) generating an order for the purchase of the article selected for customisation;
f3) optionally, paying in a secure network or Cash On Delivery.

The step g) of managing the 3D file is carried out by means of the processing unit 20 by the provider of the customisation service, through the Enterprise Resource Planning management software (ERP), following the access to the data and information contained in the IT platform for sharing data and information 12.

The step g) of managing the 3D file comprises the following steps:
g1) verifying the purchase order;
g2) optionally, verifying payment by the user;
g3) sending the 3D file to the customisation apparatus 300 of the item C to be customised.

According to an essential aspect of the invention, step h) of customising the selected consumer item C with the selected image or graphic is carried out through the customisation apparatus 300 described above.

In particular, according to an essential aspect of the invention, the step h) comprises the following steps:
h1) sensing the three-dimensional morphology of the item C to be customised through the 3D scanning device 34;
h2) generating a 3D file of the item C to be customised;
h3) comparing, through the control unit 36, the 3D file generated in step h2) with the 3D file generated by the user and sent to the customisation unit 30 according to step g3);
h4) generating printing coordinates through the electronic control module 36 according to the comparison carried out in step h3);
h5) sending instructions for printing from the electronic control module 36 to the laser printing device 35;
h6) producing the selected image or graphic on the item C on the basis of the instructions of step h5).

The step h6) is carried out according to the modes of inkless laser printing, for example, according to the technology of Zink, Inc. described above.

The method of the invention fulfils the desired objects, as it allows the user to customise a consumer item as desired, even with an *ad hoc* image or graphic, and at the same time it makes the management procedure of the order and the customising by the manufacturer automatic.

The latter will be capable of managing the manufacture of the consumer item with the maximum flexibility, since the customisation occurs only in the last step of the manufacture of the item.

It is apparent that only some particular embodiments of the present invention have been described, to which those skilled in the art will be capable of making all those modifications required for the adaptation thereof to particular applications, without thereby departing from the scope of protection of the present invention.

## Claims

1. A method for customising a 3D consumer item (C), comprising the following steps:
a) selecting the consumer item C to be customised, wherein said consumer item (C) is made of or comprises the multilayer material (100) comprising in the order:
i) a base layer (101),
ii) one or more colouring layers (102, 103, 104) containing heat-sensitive pigments or dyes, optionally interspersed by thermo-insulating layers (105, 105'), and
iii) a protective layer (106),
wherein the base layer (101) is made of a material adapted for the manufacture of consumer items such as shoes or leatherwear and wherein said pigments or heat-sensitive dyes are selected among dyes that veer from a colourless form to a coloured form when subjected to a specific quantity of thermal energy, preferably thermal energy from a laser source, and wherein, when there are more than one colouring layer, said specific quantity of thermal energy of veering of the pigments or dyes is different between the various colouring layers (102, 103, 104);
b) selecting an image or graphic for customisation;
c) generating a virtual 3D model of the item (C) to be customised;
d) optionally, modifying the virtual 3D model generated in step c);
e) generating a 3D file representative of the virtual 3D model of the steps c) or d);
f) transmitting the 3D file to the IT platform (12) of "cloud computing" for sharing data and information by means of the telecommunication network (11);
g) managing the 3D file;
h) customising the consumer item C selected with the selected image or graphic,
wherein step h) of customising the selected consumer item (C) with the selected image or graphic is carried out through a customisation apparatus (300) comprising:
- a customisation unit (30);
- optionally, a system (301) for transporting the items (C) into the customisation unit (30);
- optionally, a transport system (303) for the customised items (C) out of the customisation unit (30),
and wherein the customisation unit (30) comprises:
- an electronic control module (36) for controlling the customisation operation, configured to receive data and information from the central processing unit (20);
- a customisation chamber (32);
- a 3D scanning device (34) and a laser printing device (35) housed in the aforesaid customisation chamber (32), and wherein step h) comprises the following steps:
h1) sensing the three-dimensional morphology of the item (C) to be customised through the 3D scanning device (34);
h2) generating a 3D file of the item (C) to be customised;
h3) comparing, through the electronic control module (36), the 3D file generated in step h2) with the 3D file generated by the user and sent to the customisation unit (30) according to step g3);
h4) generating printing coordinates through the electronic control module (36) according to the comparison carried out in step h3);
h5) sending instructions for printing from the electronic control module (36) to the laser printing device (35);
h6) producing the selected image or graphic on the item (C) on the basis of the instructions of step h5).

2. The method of claim 1, wherein the base layer (101) is made of natural or synthetic leather, plastic material, fabric or composite materials derived therefrom or is a multilayer of leather-polymeric film, leather-fabric, fabric-polymeric film or combinations thereof.

3. The method of claim 1 or 2, the multilayer material (100) comprises three colouring layers (102, 103, 104), whereof one layer forming a yellow colouration (absorption in the blue), one forming a magenta colouration (absorption in the green) and one forming a light blue-cyan colouration (absorption in the red) and wherein the multilayer material (100) optionally comprises an additional layer forming a black colouration and/or one forming a white colouration.

4. The method according to any one of the claims from 1 to 3, wherein the protective layer (106) is selected between an oxygen barrier layer, a UV barrier layer and an anti-scratch or finishing coating, or it can in turn be a multilayer including one or more of the aforesaid protective layers.

5. The method according to any one of claims 1 to 4, wherein the steps from a) to f) are carried out by a user of the customisation service, using a user electronic device (10) and wherein the steps g) and h) are carried out by a provider of a customisation service, the provider of the customisation service being the manufacturer of the consumer item (C), or a third party.

6. The method according to claim 5, wherein the step a) of selecting the consumer item is carried out by the user through a user interface with an IT platform for sharing data and information (12) made available by the provider of the customisation service or by means of a software application made available by the provider of the customisation service, stored on the user electronic device (10) and executed on said device for executing the steps of the selection, said step a) comprising the following steps:
a1) selecting the type of item (C), for example shoe or leather item such as belts, bags or the like;
a2) selecting the model of the selected item;
a3) if provided, selecting the colour of the base layer (101);
a4) if provided, selecting the material of the base layer (101);
a5) in the case of shoes, selecting the size of the shoe to be customised.

7. The method according to any of the claims from 1 to 6, wherein the steps from b) to f) are carried out by the user through a user interface with an IT platform for sharing data and information (12) made available by the provider of the customisation service or by means of a software application made available by the provider of the customisation service, stored on the user electronic device (10) and executed on said device.

8. The method according to any one of the claims from 1 to 7, wherein step e) of creating the 3D file comprises generating a 3D file in a neutral format, preferably pdf format or stp/step format, and, optionally, generating a 3D file in a format compatible with 3D printers, such as polygonal 3D (mesh) files, preferably in STL, AMF or 3MF format.

9. The method according to any one of the claims from 1 to 8, wherein step f) comprises the following steps:
f1) sending the 3D file in a neutral format, preferably pdf or stp/step format;
f2) generating an order for the purchase of the article selected for customisation;
f3) optionally, paying in a secure network or Cash On Delivery.

10. The method according to any one of the claims from 1 to 9, wherein step g) of managing the 3D file is carried out by the provider of the customisation service by means of access to central processing unit (20) and comprise the following steps:
g1) verifying the purchase order;
g2) optionally, verifying payment by the user;
g3) sending the 3D file to the customisation apparatus (300) of the item (C) to be customised.

## Patentansprüche

1. Verfahren zum Individualisieren eines 3D-Gebrauchsgegenstands (C), umfassend die folgenden Schritte:
a) Auswählen des zu individualisierenden Gebrauchsgegenstands (C), wobei der Gebrauchsgegenstand (C) aus dem mehrschichtigen Material (100) hergestellt ist oder dieses umfasst, umfassend in der Reihenfolge:
i) eine Basisschicht (101),
ii) eine oder mehrere Färbeschichten (102, 103, 104), die wärmeempfindliche Pigmente oder Farbstoffe enthalten und optional von wärmeisolierenden Schichten (105, 105') durchsetzt sind, und
iii) eine Schutzschicht (106),
wobei die Basisschicht (101) aus einem Material hergestellt ist, das für die Herstellung von Gebrauchsgegenständen wie Schuhen oder Lederbekleidung geeignet ist, und wobei die Pigmente oder wärmeempfindlichen Farbstoffe unter Farbstoffen ausgewählt sind, die von einer farblosen Form in eine farbige Form übergehen, wenn sie einer bestimmten Menge an thermischer Energie, vorzugsweise thermischer Energie aus einer Laserquelle, ausgesetzt werden, und wobei, wenn mehr als eine Färbeschicht vorhanden ist, die spezifische Menge an thermischer Energie für das Übergehen der Pigmente oder Farbstoffe zwischen den verschiedenen Färbeschichten (102, 103, 104) unterschiedlich ist;
b) Auswählen eines Bildes oder einer Grafik zur Individualisierung;
c) Erzeugen eines virtuellen 3D-Modells des zu individualisierenden Gegenstands (C);
d) optional Modifizieren des in Schritt c) erzeugten virtuellen 3D-Modells;
e) Erzeugen einer 3D-Datei, die das virtuelle 3D-Modell der Schritte c) oder d) darstellt;
f) Übertragen der 3D-Datei auf die IT-Plattform (12) eines "Cloud-Rechnens" zum Austausch von Daten und Informationen mittels des Telekommunikationsnetzwerks (11);
g) Verwalten der 3D-Datei;
h) Individualisieren des ausgewählten Gebrauchsgegenstands (C) mit dem ausgewählten Bild oder der ausgewählten Grafik,
wobei Schritt h) des Individualisierens des ausgewählten Gebrauchsgegenstands (C) mit dem ausgewählten Bild oder der ausgewählten Grafik durch eine Individualisierungsvorrichtung (300) durchgeführt wird, umfassend:
- eine Individualisierungseinheit (30);
- optional ein System (301) für den Transport der Gegenstände (C) in die Individualisierungseinheit (30);
- optional ein Transportsystem (303) für die individualisierten Gegenstände (C) aus der Individualisierungseinheit (30),
und wobei die Individualisierungseinheit (30) umfasst:
- ein elektronisches Steuermodul (36) zum Steuern des Individualisierungsvorgangs, das so konfiguriert ist, dass es Daten und Informationen von der zentralen Verarbeitungseinheit (20) empfängt;
- eine Individualisierungskammer (32);
- eine 3D-Scanvorrichtung (34) und eine Laserdruckvorrichtung (35), die sich in der oben genannten Individualisierungskammer (32) befinden, und wobei Schritt h) die folgenden Schritte umfasst:
h1) Erfassen der dreidimensionalen Morphologie des zu individualisierenden Gegenstands (C) durch die 3D-Scanvorrichtung (34);
h2) Erzeugen einer 3D-Datei des zu individualisierenden Gegenstands (C);
h3) Vergleichen der in Schritt h2) erzeugten 3D-Datei durch das elektronische Steuermodul (36) mit der 3D-Datei, die vom Benutzer erzeugt und gemäß Schritt g3) an die Individualisierungseinheit (30) gesendet wurde;
h4) Erzeugen von Druckkoordinaten durch das elektronische Steuermodul (36) gemäß dem in Schritt h3) durchgeführten Vergleich;
h5) Senden von Anweisungen zum Drucken von dem elektronischen Steuermodul (36) an die Laserdruckvorrichtung (35);
h6) Produzieren des ausgewählten Bildes oder der ausgewählten Grafik auf dem Gegenstand (C) auf der Grundlage der Anweisungen von Schritt h5).

2. Verfahren nach Anspruch 1, wobei die Basisschicht (101) aus natürlichem oder synthetischem Leder, Kunststoffmaterial, Gewebe oder daraus abgeleiteten Verbundwerkstoffen hergestellt ist oder eine mehrschichtige Leder-Polymer-Folie, Leder-Gewebe, Gewebe-Polymer-Folie oder Kombinationen davon ist.

3. Verfahren nach Anspruch 1 oder 2, wobei das mehrschichtige Material (100) drei Färbeschichten (102, 103, 104) umfasst, von denen eine Schicht eine gelbe Färbung (Absorption im Blauen), eine Schicht eine magentafarbene Färbung (Absorption im Grünen) und eine Schicht eine hellblau-cyanfarbene Färbung (Absorption im Roten) bildet und wobei das mehrschichtige Material (100) optional eine zusätzliche Schicht, die eine schwarze Färbung bildet, und/oder eine Schicht, die eine weiße Färbung bildet, umfasst.

4. Verfahren nach einem der Ansprüche 1 bis 3, wobei die Schutzschicht (106) zwischen einer Sauerstoffbarriereschicht, einer UV-Barriereschicht und einer kratzfesten oder veredelnden Beschichtung ausgewählt wird, oder sie ihrerseits eine Mehrschicht sein kann, die eine oder mehrere der vorgenannten Schutzschichten beinhaltet.

5. Verfahren nach einem der Ansprüche 1 bis 4, wobei die Schritte a) bis f) von einem Benutzer des Individualisierungsdienstes unter Verwendung einer elektronischen Vorrichtung (10) des Benutzers durchgeführt werden und wobei die Schritte g) und h) von einem Anbieter eines Individualisierungsdienstes bereitgestellt werden, wobei der Anbieter des Individualisierungsdienstes der Hersteller des Gebrauchsgegenstands (C) oder ein Dritter ist.

6. Verfahren nach Anspruch 5, wobei der Schritt a) des Auswählens des Gebrauchsgegenstands vom Benutzer durch eine Benutzerschnittstelle mit einer IT-Plattform für den Austausch von Daten und Informationen (12), die vom Anbieter des Individualisierungsdienstes bereitgestellt wird, oder mittels einer Software-Anwendung, die vom Anbieter des Individualisierungsdienstes bereitgestellt wird, auf der elektronischen Vorrichtung (10) des Benutzers gespeichert ist und auf der Vorrichtung zum Ausführen der Schritte der Auswahl ausgeführt wird, durchgeführt wird, wobei der Schritt a) die folgenden Schritte umfasst:
a1) Auswählen der Art des Gegenstands (C), zum Beispiel Schuh oder Ledergegenstand wie Gürtel, Taschen oder ähnliches;
a2) Auswählen des Modells des ausgewählten Gegenstands;
a3) falls bereitgestellt, Auswählen der Farbe der Basisschicht (101);
a4) falls bereitgestellt, Auswählen des Materials der Basisschicht (101);
a5) bei Schuhen, Auswählen der Größe des zu individualisierenden Schuhs.

7. Verfahren nach einem der Ansprüche 1 bis 6, wobei die Schritte b) bis f) vom Benutzer durch eine Benutzerschnittstelle mit einer IT-Plattform für den Austausch von Daten und Informationen (12), die vom Anbieter des Individualisierungsdienstes bereitgestellt wird, oder mittels einer Software-Anwendung, die vom Anbieter des Individualisierungsdienstes bereitgestellt wird, die auf der elektronischen Vorrichtung (10) des Benutzers gespeichert ist und auf dieser Vorrichtung ausgeführt wird, durchgeführt werden.

8. Verfahren nach einem der Ansprüche 1 bis 7, wobei Schritt e) des Erstellens der 3D-Datei das Erzeugen einer 3D-Datei in einem neutralen Format, vorzugsweise im pdf-Format oder im stp/step-Format, und optional das Erzeugen einer 3D-Datei in einem mit 3D-Druckern kompatiblen Format umfasst, wie polygonale 3D-(Netz)Dateien, vorzugsweise im STL-, AMF- oder 3MF-Format.

9. Verfahren nach einem der Ansprüche 1 bis 8, wobei Schritt f) die folgenden Schritte umfasst:
f1) Senden der 3D-Datei in einem neutralen Format, vorzugsweise im pdf- oder stp/step-Format;
f2) Erzeugen einer Bestellung für den Kauf des für die Individualisierung ausgewählten Artikels;
f3) optional Bezahlen über ein sicheres Netzwerk oder per Nachnahme.

10. Verfahren nach einem der Ansprüche 1 bis 9, wobei Schritt g) des Verwaltens der 3D-Datei vom Anbieter des Individualisierungsdienstes mittels Zugriff auf eine zentrale Verarbeitungseinheit (20) durchgeführt wird und die folgenden Schritte umfasst:
g1) Überprüfen der Bestellung;
g2) optional Überprüfen der Zahlung durch den Benutzer;
g3) Senden der 3D-Datei an die Individualisierungsvorrichtung (300) des zu individualisierenden Gegenstands (C).

## Revendications

1. Procédé de personnalisation d'un article 3D de consommation (C), comprenant les étapes suivantes :
a) la sélection de l'article de consommation (C) à personnaliser, ledit article de consommation (C) étant constitué du matériau multicouche (100) ou le comprenant, le matériau comprenant dans l'ordre :
i) une couche de base (101),
ii) une ou plusieurs couches colorantes (102, 103, 104) contenant des pigments ou des colorants thermosensibles, éventuellement entrecoupées de couches thermo-isolantes (105, 105') et
iii) une couche protectrice (106),
la couche de base (101) étant constituée d'un matériau adapté à la fabrication d'articles de consommation tels que des chaussures ou des vêtements en cuir et lesdits pigments ou colorants thermosensibles étant choisis parmi des colorants qui passent d'une forme incolore à une forme colorée lorsqu'ils sont soumis à une quantité spécifique d'énergie thermique, de préférence de l'énergie thermique provenant d'une source laser, et lorsqu'il y a plus d'une couche colorante, ladite quantité spécifique d'énergie thermique de changement de forme des pigments ou colorants étant différente entre les diverses couches colorantes (102, 103, 104) ;
b) la sélection d'une image ou d'un dessin de personnalisation ;
c) la génération d'un modèle 3D virtuel de l'article (C) à personnaliser ;
d) la modification éventuelle du modèle 3D virtuel généré à l'étape c) ;
e) la génération d'un fichier 3D représentatif du modèle 3D virtuel des étapes c) ou d) ;
f) la transmission du fichier 3D à la plateforme informatique (12) infonuagique pour le partage de données et d'informations au moyen du réseau de télécommunication (11) ;
g) la gestion du fichier 3D ;
h) la personnalisation de l'article de consommation (C) sélectionné avec l'image ou avec le dessin sélectionné,
dans lequel l'étape h) de personnalisation de l'article de consommation sélectionné (C) selon l'image ou selon le dessin sélectionné est réalisée via un appareil de personnalisation (300) comprenant :
- une unité de personnalisation (30) ;
- éventuellement, un système (301) de transport des articles (C) jusqu'à l'unité de personnalisation (30) ;
- éventuellement, un système de transport (303) des articles personnalisés (C) hors de l'unité de personnalisation (30),
et le dispositif de personnalisation (30) comprenant :
- un module de commande électronique (36) permettant de commander l'opération de personnalisation, conçu pour recevoir des données et des informations en provenance de l'unité centrale de traitement (20) ;
- une chambre de personnalisation (32) ;
- un dispositif de numérisation 3D (34) et un dispositif d'impression laser (35) logés dans la chambre de personnalisation (32) précitée, et dans lequel l'étape h) comprend les étapes suivantes :
h1) détection de la morphologie tridimensionnelle de l'article (C) à personnaliser grâce au dispositif de numérisation 3D (34) ;
h2) génération d'un fichier 3D de l'article (C) à personnaliser ;
h3) comparaison, par l'intermédiaire du module de commande électronique (36), du fichier 3D généré à l'étape h2) au fichier 3D généré par l'utilisateur et envoyé à l'unité de personnalisation (30) selon l'étape g3) ;
h4) génération de coordonnées d'impression via le module de commande électronique (36) selon la comparaison effectuée à l'étape h3) ;
h5) envoi d'instructions d'impression provenant du module de commande électronique (36) au dispositif d'impression laser (35) ;
h6) production de l'image ou du dessin sélectionné sur l'article (C) d'après des instructions de l'étape h5).

2. Procédé selon la revendication 1, dans lequel la couche de base (101) est constituée de cuir naturel ou synthétique, de matière plastique, de tissu ou de matériaux composites dérivés de ceux-ci ou est une multicouche de cuir-film polymère, de cuir-tissu, de tissu-film polymère ou de leurs combinaisons.

3. Procédé selon la revendication 1 ou 2, le matériau multicouche (100) comprenant trois couches colorantes (102, 103, 104), parmi lesquelles une couche forme une coloration jaune (absorption dans le bleu), une forme une coloration magenta (absorption dans le vert) et une forme une coloration bleu-cyan clair (absorption dans le rouge) et le matériau multicouche (100) comprenant éventuellement une couche supplémentaire formant une coloration noire et/ou formant une coloration blanche.

4. Procédé selon l'une quelconque des revendications 1 à 3, dans lequel la couche protectrice (106) est choisie entre une couche barrière à l'oxygène, une couche barrière aux UV et un revêtement anti-rayures ou de finition, ou elle peut à son tour être une multicouche comportant une ou plusieurs des couches protectrices précitées.

5. Procédé selon l'une quelconque des revendications 1 à 4, dans lequel les étapes a) à f) sont réalisées par un utilisateur du service de personnalisation, à l'aide d'un dispositif électronique utilisateur (10) et dans lequel les étapes g) et h) sont réalisées par un fournisseur d'un service de personnalisation, le fournisseur du service de personnalisation étant le fabricant de l'article de consommation (C) ou un tiers.

6. Procédé selon la revendication 5, dans lequel l'étape a) de sélection de l'article de consommation est réalisée par l'utilisateur via une interface utilisateur avec une plateforme informatique de partage de données et d'informations (12) mise à disposition par le fournisseur du service de personnalisation ou au moyen d'une application logicielle mise à disposition par le fournisseur du service de personnalisation, stockée sur le dispositif électronique utilisateur (10) et exécutée sur ledit dispositif pour exécuter les étapes de la sélection, ladite étape a) comprenant les étapes suivantes :
a1) sélection du type d'article (C), par exemple une chaussure ou un article en cuir tel que des ceintures, des sacs ou similaires ;
a2) sélection du modèle de l'article sélectionné;
a3) le cas échéant, sélection de la couleur de la couche de base (101) ;
a4) le cas échéant, sélection du matériau de la couche de base (101) ;
a5) dans le cas de chaussures, sélection de la taille de la chaussure à personnaliser.

7. Procédé selon l'une quelconque des revendications 1 à 6, dans lequel les étapes b) à f) sont réalisées par l'utilisateur via une interface utilisateur avec une plateforme informatique de partage de données et d'informations (12) mise à disposition par le fournisseur du service de personnalisation ou au moyen d'une application logicielle mise à disposition par le fournisseur du service de personnalisation, stockée sur le dispositif électronique utilisateur (10) et exécutée sur ledit dispositif.

8. Procédé selon l'une quelconque des revendications 1 à 7, dans lequel l'étape e) de création du fichier 3D comprend la génération d'un fichier 3D en format neutre, de préférence en format pdf ou en format stp/step, et, éventuellement, la génération d'un fichier 3D en format compatible avec des imprimantes 3D, par exemple des fichiers 3D polygonaux (mesh), de préférence en format STL, AMF ou 3MF.

9. Procédé selon l'une quelconque des revendications 1 à 8, dans lequel l'étape f) comprend les étapes suivantes :
f1) envoi du fichier 3D en format neutre, de préférence en format pdf ou stp/step ;
f2) génération d'un bon de commande pour l'achat de l'article sélectionné pour personnalisation ;
f3) éventuellement, paiement sur un réseau sécurisé ou à réception.

10. Procédé selon l'une quelconque des revendications 1 à 9, dans lequel l'étape g) de gestion du fichier 3D est réalisée par le fournisseur du service de personnalisation au moyen d'un accès à l'unité centrale de traitement (20) et comprend les étapes suivantes :
g1) vérification du bon de commande ;
g2) éventuellement, vérification du paiement par l'utilisateur ;
g3) envoi du fichier 3D à l'appareil de personnalisation (300) de l'article (C) à personnaliser.
